# EUROPÄISCHE PATENTSCHRIFT

(11) **EP 1 181 858 B1**
(45) Veröffentlichungstag und Bekanntmachung des Hinweises auf die Patenterteilung: **21.07.2004**
(21) Anmeldenummer: 01119296.0
(22) Anmeldetag: 10.08.2001
(51) Int. Cl.: A01D 34/00, A01D 34/82

(54) **Mäh- und Mulchsystem für Rasenmäher**
Mowing and mulching system for lawnmower
Système de coupe et de déchiquetage pour tondeuse à gazon

(30) Priorität: 26.08.2000 DE 10042086; 21.07.2001 DE 10135656
(43) Veröffentlichungstag der Anmeldung: 27.02.2002
(73) Patentinhaber: MWS Schneidwerkzeuge GmbH & Co KG, 98574 Schmalkalden (DE)
(72) Erfinder: Tröger, Hartmut, 98574 Asbach (DE); Tutschka, Alfred, 64546 Mörsfelden-Wald (DE)

(56) Entgegenhaltungen:
- EP-A- 0 642 730
- DE-A- 19 528 832
- DE-C- 4 434 272
- US-A- 5 142 851
- US-A- 5 197 268
- US-A- 5 305 589
- US-A- 5 442 902
- US-A- 5 457 947
- US-A- 5 669 213

## Beschreibung

Die Erfindung betrifft ein sichelartig arbeitendes Mäh- und Mulchsystem für Rasenmäher mit auf motorisch angetriebener Antriebswelle aufgenommenen und in einer unterseitig offenen, topfartigen Abdeckung umlaufenden, an ein zentrisches Nabenteil sich anschließenden mehrflügeligen Messern, bei denen in Umlaufrichtung an den vorderen Randbereichen der Messerflügel mehrere Schneidenabschnitte und an den rückwartigen Randbereichen Abweis- oder schaufelartige Leitelemente ausgebildet sind.

Mäh- und Mulchsysteme für Rasenmäher, die durch mehrfaches Zerkleinern des Mahgutes einen Mulcheffekt bewirken, sind prinzipiell bekannt

So ist beispielsweise durch die DE-4034978 A1 ein Sichelmäher, insbesondere ein Rasenmäher bekannt, dessen Messer an den in Umlaufrichtung rückseitigen Längskanten, zumindest im Bereich der Messerflügelenden, mit Abweiselementen versehen ist, die an dem einen Flugelende nach oben und am anderen Flügelende nach unten, über die Messerebene hinaus, vorstehend ausgebildet sind. Diese Abweiser können zweckmäßig durch ein Aufkanten des Messerrückens hergestellt oder durch ein Aufschweißen von Materialstreifen hergerichtet sein und sollen neben weiteren, auch an den Messerflugelenden angebrachten, als Abweiser wirkenden Endscheiben dazu dienen, das abgeschnittene Mahgut beim stetigen Messerumlauf jeweils mehrfach in den Wirkungsbereich der Messerschneiden zu befördern, um es dadurch einer sich wiederholenden Zerkleinerung zu unterwerfen, bevor es innerhalb der topfartigen Abdeckung nach unten fällt und somit in den Erdboden wieder eingetragen wird.

Wie sich gezeigt hat, ist mit diesem Sichelmäher der letztgenannte, speziell angestrebte Mulcheffekt jedoch in nur unvollkommener Weise erreicht worden, weil die Abweiselemente den ihnen zugedachten Zweck nicht ausreichend erfüllen konnten

Es wurden deshalb Versuche unternommen, dem Problem einer vollkommeneren Zerkleinerung des abgeschnittenen Mähgutes und dessen Vermulchung durch Veränderungen der Messerformen effektvoller beizukommen, was schließlich auch zu Lösungen geführt hat, wie sie mit der EP 0300642 A1 und der DE-19528832 C2 in Vorschlag gebracht worden sind

Auch der mit der DE-19542860 A1 in Vorschlag gebrachte Mulchmäher, bei dem ein Mähmesser und zwei Mulchmesser um eine gemeinsame oder auch gegensinnig umlaufende Drehachse übereinander angeordnet sind und bei dem außerdem mit den Hinterkanten der Messer ein von der Bewegungsebene des Gehäuses weggerichteter, die Vermulchung fördernder Luftstrom erzeugt wird, vermochte das Problem einer ausreichenden, feinzerkleinerten Vermulchung nicht zu lösen.

Bei diesen dort in Vorschlag gebrachten Messern für Sichelmäher, die bei ausreichenden Mähleistungen insbesondere auch ein wirkungsvolles Vermulchen des geschnittenen Mähgutes bewirken sollen, wurde von der Aufgabenstellung ausgegangen, zunächst die Messerschneiden abgesetzt bzw. gestuft auszubilden und in mehreren Umlaufebenen arbeiten zu lassen und durch an den Flügel- bzw. Messerenden angebrachte flügelartige, schräggestellte Leitflächen zu bewirken, dass das von den Messerschneiden abgeschnittene Mähgut angehoben wird und nach Möglichkeit, je nach Trocknungsgrad oder Halmlänge des Grases, mehrfach in den Wirkungsbereich der umlaufenden Messerschneiden gelangt, mit der Folge, dass eine mehrfache Zerkleinerung des Mähgutes stattfindet.

Bei diesen Messerausführungen sind zunächst die Flügelenden als gegenüber der Umlaufebene des Messers schräggestellte Leitflachen ausgebildet, die ausgehend von den in Umlaufrichtung vorderen Langskanten der Messerflügel zu den hinteren Längskanten hin einen ansteigenden Verlauf haben. Desweiteren ist der äußere Schneidenabschnitt derart profiliert, dass dieser unterhalb der Ebene des Nabenteils liegt.
Andere Gestaltungselemente bestehen darin, dass an den Flügelenden in Umlaufrichtung hinter den Schneiden in Messerlängsrichtung verlaufende Abweiselemente vorgesehen sind, die sich von den Messerflügeln nach oben und/oder unten erstrecken und senkrecht oder auch schräg zur Umlaufebene des Messers angebracht sein können. Auch durch eine unterschiedliche Bemessung der Wirkflächen dieser Abweiselemente wurde versucht, die Effekte der Verwirbelung und damit der mehrfachen Zerkleinerung des Mähgutes zu verbessern bzw. zu erhöhen.

Obzwar mit diesen Messertypen auch in Verbindung mit Mulchmessern Fortschritte erreicht werden konnten, wurde der angestrebte Erfolg nicht erreicht. Der erwartete Schnittgutauswurf bzw. dessen Einbringen in die abgemähte Rasenfläche läßt noch immer zu wünschen übrig.

Aus diesen unbefriedigenden Umständen resultiert der Zweck und die Aufgabe der vorliegenden Erfindung.

Der Zweck besteht darin, ein Mäh- und Mulchsystem zur Anwendung bei hand- oder maschinell geführten Rasenmähern zu schaffen, welches ein feineres Vermulchen des Grasschnittes erreichen lässt.

Der Erfindung liegt die Aufgabe zugrunde, ein vollkommener arbeitendes Mäh- und Mulchsystem zu entwickeln, welches bei erhöhter Schneidleistung den Effekt einer Feinstzerkleinerung des Mähgutes wesentlich verbessert, zugleich den vermulchten, nahezu pulverisierten Grasschnitt gezielt auswirft, indem dieser in die Grasnarbe hineingedrückt und dort abgelegt wird.

Gelost wird die gestellte Aufgabe durch die Gesamtheit der im Patentanspruch 1 charakterisierten Merkmale, wobei weitergehende Ausgestaltungen und Losungsmerkmale in den Unteransprüchen dargelegt sind

Bei dem erfindungsgemäß ausgeführten, kombiniert arbeitenden Mäh- und Mulchsystem für Rasenmäher liegen die Schneiden der in einem gestaffelten System nebeneinander und in Arbeitsrichtung versetzt zueinander angeordneten Messern in einer gemeinsamen Schnittebene, wobei der äußere, im Bereich der Flügelenden liegende Schneidenabschnitt jeweils unterhalb der Ebene des Nabenteiles des Messers liegt. An diesen äußeren Schneidenabschnitt schließt sich ein mittlerer Schneidenabschnitt, der sich über die Ebene des Nabenteiles hinaus erhebt sowie ein innerer Schneidenabschnitt an, der in den Nabenteil übergeht und dort endet. Die Flügelenden des Messers, deren in Umlaufrichtung vordere Längskanten unterhalb der Ebene des Nabenteils liegen, sind als gegenüber der Umlaufebene des Messers schräggestellte Leitflächen ausgebildet, die ausgehend von deren in Umlaufrichtung vorderen Längskante zur hinteren Langskante hin einen ansteigenden Verlauf haben.
Diese Messerausführung findet in prinzipiell bekannter Art in einem Sichelmäher Anwendung, der eine unterseitig offene, topfartige Abdeckung zur Aufnahme der Messer aufweist, deren in Schnittnchtung hintere und seitliche Wandung bis unter die Ebene des äußeren Schneidenabschnitts reicht

Die angestrebte, besonders wirksame Feinzerkleinerung bzw. ein nahezu pulverisiert gehäckseltes, d. h. feinvermulchtes Mähgut wird dadurch erreicht, dass, wie erfindungsgemäß vorgesehen, innerhalb der besagten Abdeckung des Sichelmahers ein mehrfach sich wiederholendes Zerschneiden und Zerschlagen des von den äußeren Schneidenabschnitten der Messerflügel abgeschnittenen Mähgutes erfolgt. Zu diesem Zweck ist das aus zwei- oder mehrflügeligen Messern bestehende Mähwerk mit einer Mulcheinrichtung ausgestattet, die ein sich mehrfach wiederholendes Zerschneiden und Zerschlagen des Mähgutes zu bewirken in der Lage ist.

Diese Mulcheinrichtung besteht im wesentlichen aus einer tellerartigen, mit Leitblechen besetzten Turboscheibe, die im Nabenbereich des Messers angeordnet und mit diesem auf der Antriebswelle befestigt ist. Diese Turboscheibe erzeugt einen Turboeffekt, dergestalt, dass das abgeschnittene Mahgut innerhalb der topfartigen Abdeckung mehrfach herumgewirbelt und durch die Messerschneiden mehrfach erfasst und kleingehackselt wird. Zum Zwecke einer kräftigen Durchwirbelung des geschnittenen Mahgutes innerhalb der Abdeckung trägt der Aufnahmeteller der Turboscheibe in seinem äußeren Randbereich mehrere etwa radial oder in der Ebene einer vor- oder nacheilenden Sekante angeordnete, axial aus der Ebene des Aufnahmetellers hervortretende Leitbleche, durch die das aufgenommene Mahgut, dieses immer wieder vermrbelnd und auch zerschlagend, wiederholt den Schneidebenen des Messers zugeführt wird, um dort wiederum zerschnitten und zerkleinert zu werden. Ein gleichwirkender Zusatzeffekt wird durch die an den äußeren Schneidenabschnitten der Messerflugel angeordneten Leitflächen bzw Abweiselemente erreicht, die in diesem Fall die Mäh- und Mulchteilchen den von der Turboscheibe erzeugten Teilchenstrom entgegengeführt werden und dadurch zur weiteren Durchmischung sorgen.

Die Leitbleche sind in ihrer Anzahl sowie in Form und Große dem zu schneidenden Mähgut angepasst und werden in verschiedenen Anordnungen und Ausführungsformen bereitgestellt, je nachdem, ob es sich beispielsweise um mehr blätterartiges oder halmartiges sowie trockenes oder feuchtes Gras handelt

Ein besonders wirkungsvolles Zerschlagen und Vermulchen des Mahgutes wird bei diesem in einem gestaffelten System arbeitenden Mäh- und Mulchsystem noch dadurch erreicht, dass in Vortriebsrichtung des Rasenmähers seitlich der gestaffelt angeordneten Messer, vorzugsweise oberhalb deren Umlauf- und Schnittebene eine nach Art eines Schaufelrades gestaltete Turbine angeordnet ist, deren Umlaufrichtung jener der gleichsinnig angetriebenen Messer entspricht.

Zusammen mit der Wirkungsweise der auf den einzelnen Messerachsen, auch mit unterschiedlichen Turboeffekten, angeordneten Turboscheiben werden durch die genannte, seitlich der gestaffelt stehenden Messer angeordneten Turbine innerhalb der topfförmigen Abdeckung Turbolenzen erzeugt, die der stetigen Durchwirbelung des Mähgutes dienen.

Mit dieser besonderen Ausbildung dieses erfindungsgemäßen Mäh- und Mulchsystems werden überraschenderweise bei guter Mähleistung ein hoher Vermulchungsgrad des Mähgutes erreicht, welcher eine wichtige Voraussetzung dafür ist, dieses als Gründünger wieder in den Boden einzubringen.

Der durch die Turboscheiben im Inneren der nur nach unten offenen Abdeckung des Rasenmähers erzeugte Turboeffekt sorgt dafür, dass das vermulchte Mähgut in die gemähte Rasenoberfläche gewünschtermaßen hineingedrückt wird, ohne es, wie sonst üblich, anderweitig entsorgen zu müssen

Ein Ausführungsbeispiel der Erfindung soll nachstehend anhand der zugehörigen Zeichnungen dargestellt und erläutert werden.

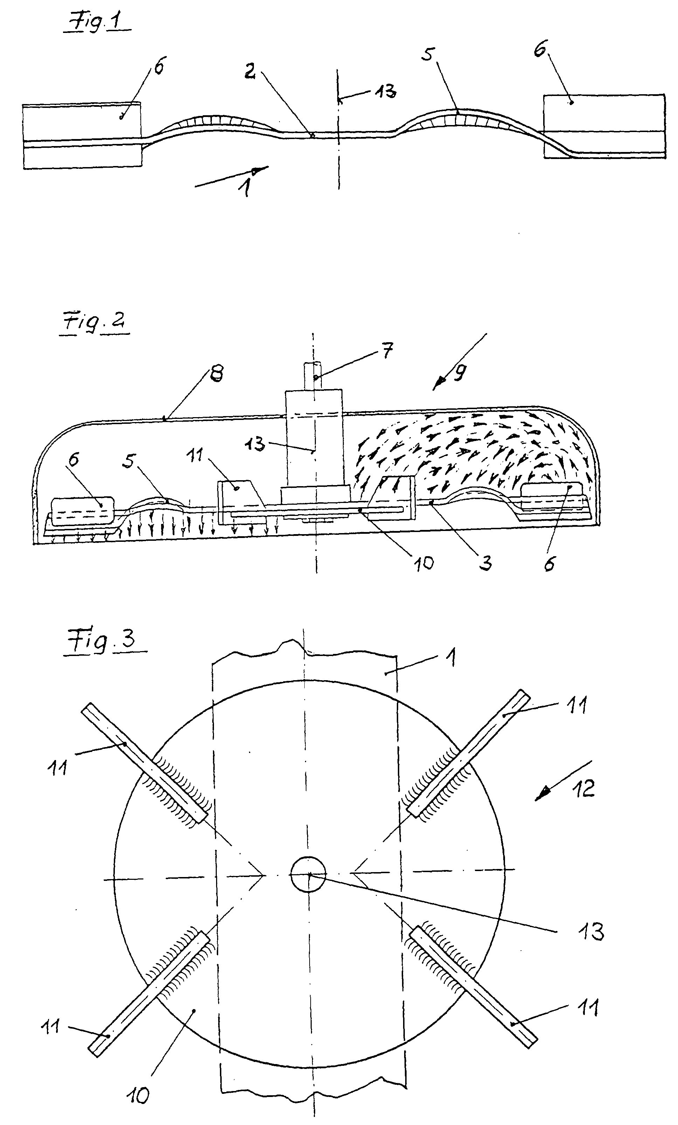

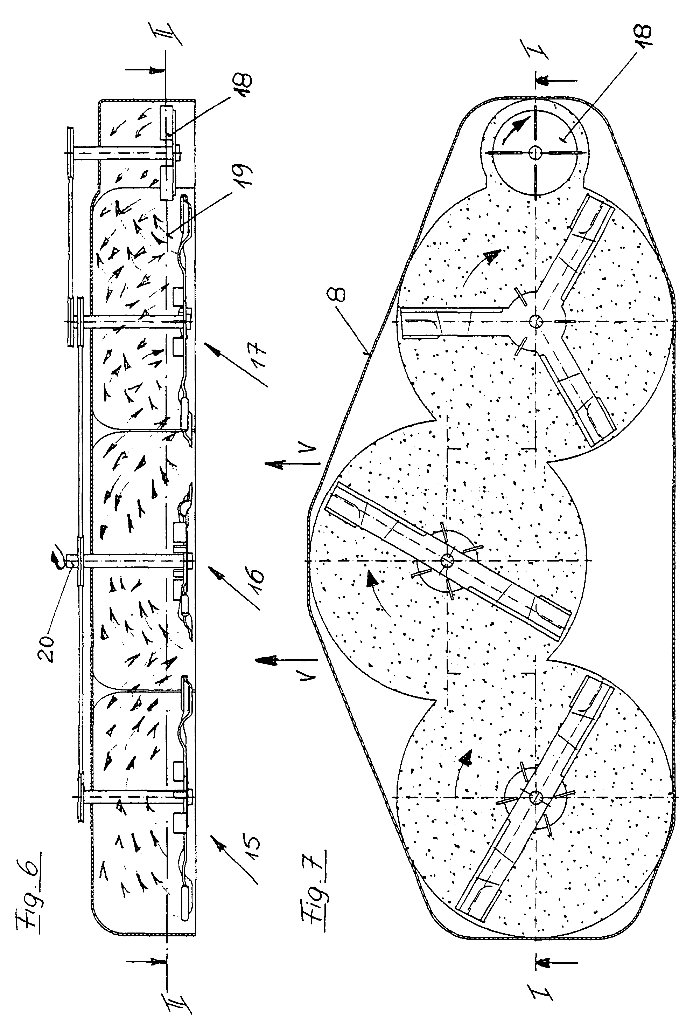

Es zeigen:
Fig. 1
   ein Messer aus der Sicht der Schnittebene ohne Turboscheibe;
Fig 2
   die stilisierte Vorderansicht eines Rasenmähers mit Antriebswelle und Abdeckung, jedoch ohne Fahrwerk und mit im Inneren der Abdeckung angeordneten Mäh- und Mulchsystem, wobei auf der rechten Seite des Zeichnungsbildes die Luftströme zur Vermulchung des Mähgutes und auf der linken Seite das Einbringen des vermulchten Mähgutes in den Boden andeutungsweise dargestellt ist;
Fig. 3
   die Draufsicht auf eine Turboscheibe, bestehend aus Aufnahmeteller und Leitblechen, mit angedeutet dargestelltem Messer,
Fig. 4 ,
   die Vorderansicht der Turboscheibe nach Fig. 3 in ihrer Arbeitsebene;
Fig. 5
   die Draufsicht auf ein dreiflügelig ausgeführtes Messer, bei dem Aufnahmeteller und Leitbleche in den Nabenteil des Messers integriert sind;
Fig. 6
   die stilisierte Vorderansicht eines Mäh- und Mulchsystems nach Erfindung im Schnitt entlang der Linie I-I in Fig. 7;
Fig. 7
   die Draufsicht auf das Mäh- und Mulchsystem nach Fig. 6 entlang der Linie II-II nach Fig. 6.

Die zeichnerischen Darstellungen sind teilweise schematisiert und als Skizzen zu verstehen, die keine maßstäblichen Verhältnisse an den konstruktiven Elementen des kombiniert arbeitenden Mäh- und Mulchsystems für Rasenmäher wiedergeben.

Das Messer 1 besteht in an sich bekannter Weise aus einem zentralen Nabenteil 2 mit sich an diesen anschließenden Messerflügeln 3, an deren vorderen Längskanten gerade verlaufende Schneiden 4 sowie nach dem Nabenteil 2 hin sich erstreckende bogenförmige Schneidenabschnitte 5, ausgebildet sind. An den Flügelenden sind in ihrer Art und Wirkung bekannte plattenförmige Abweiselemente 6 angebracht, wie das in Fig. 1; 2 und 5 gezeigt ist.

Mit dem Nabenteil 2 ist das Messer auf der Antriebswelle 7 des mit einer Abdeckung 8 versehenen Rasenmähers 9 in üblicher Weise befestigt.

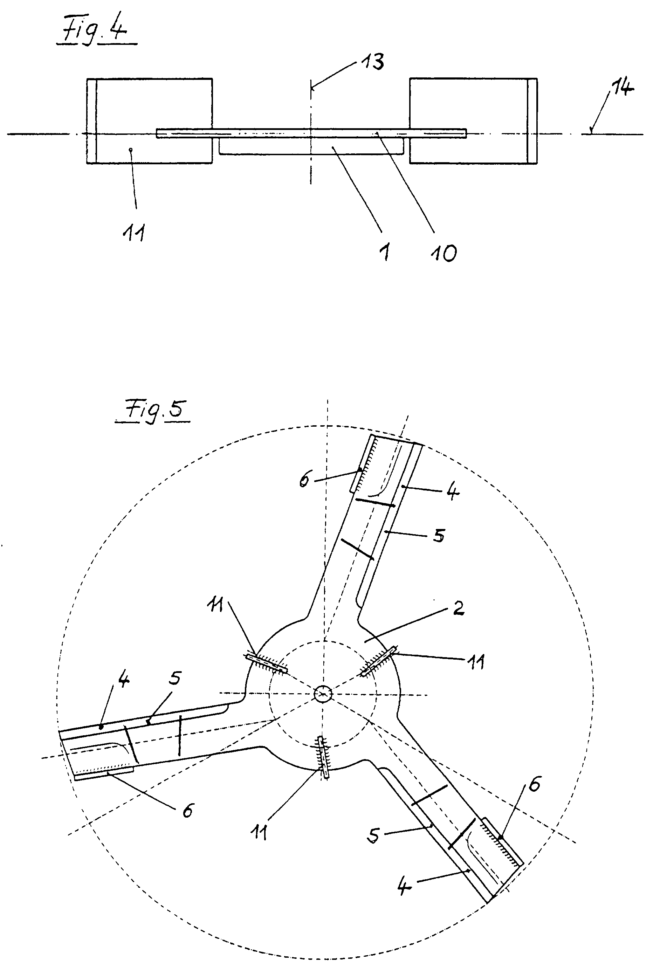

Im Bereich des Nabenteiles 2 ist, wie Fig. 2 zeigt, die erfindungsgemäße, aus Aufnahmeteller 10 sowie Leitblechen 11 bestehende Turboscheibe12, beispielsweise eine solche nach Fig. 3 und 4, am Messer 1 anliegend, angeordnet, die gemeinsam mit dem Messer 1 ein sog. Mäh- und Mulchwerk innerhalb des Rasenmähers bildet.
Die Aufnahmeteller 10 sowie auch die zugehörigen Leitbleche 11, die am Aufnahmeteller 10 fest, z. B. durch Verschweißen, angebracht sind, können in ihrer Anzahl, ihrer Form und ihrer flächenmäßigen Größe unterschiedlich ausgeführt sein, um den beschriebenen Turboeffekt im Inneren der Abdeckung 8 nach Bedarf beim Schneiden und Mulchen der unterschiedlichen Gräser oder deren Wuchs einstellen bzw. beeinflussen zu können.

Zu diesem Zweck sollen die Leitbleche 11 auf dem Aufnahmeteller 10 desweiteren mit unterschiedlichen Anstellwinkeln, bezogen auf die Rotationsachse 13 des Mäh- und Mulchwerkes oder auch in vorwärts oder rückwärts geneigter Lage, bezogen auf die Rotationsebene 14 der Turboscheibe 12, angebracht sein.

Die Leitbleche 11 der Turboscheibe als auch die Abweiselemente am Messer 1 und schließlich auch noch die speziell ausgebildete Messerform der einzelnen Schneidenabschnitte erzeugen im Inneren der Abdeckung 8 sich ineinander verwirbelnde Luftströme, wie sie in Fig. 2 stilistisch dargestellt sind. Diese Luftströme bilden jenen besagten Turboeffekt, der zu effektvollen Vermulchung des Grases und dessen Eintrag in den Boden führt.

In einer weiteren bevorzugten Ausführungsform dieser Rasenmäher sind in der Abdeckung 8 mehrere, vorzugsweise drei der vorgenannten Mäh- und Mulchwerke 15; 16; 17 untergebracht, denen zur weiteren Vervollkommnung des Vermulchens des Mähgutes zusätzlich noch eine Turbine 18 zugeordnet ist, wie das Fig. 6 und Fig. 7 zeigt.

Die Mäh- und Mulchwerke 15; 16; 17 sind dabei in einem gestaffelten System, in Reihe nebeneinander angeordnet, wobei zweckmäßig die mittlere der drei Mäh- und Mulchwerke in der Schnitt- und Vortriebsrichtung "V" des Rasenmähers betrachtet, vor den beiden seitlich angeordneten Mäh- und Mulchwerken platziert ist (Fig. 7).

Seitlich der gestaffelt angeordneten Mäh- und Mulchwerke 15; 16; 17, jedoch in einer oberhalb der Rotationsebene 14 der Turboscheibe 12 liegenden Ebene 19 ist die Turbine 18 angeordnet. Diese ist vorteilhafterweise schneller, mindestens aber mit der gleichen Drehzahl wie die Messer 1, und gleichsinnig wie diese über einen zentralen Antrieb 20 abgetrieben. Die Turbine 18 mit Leitblechen 21 sorgt dafür, dass im Innenraum der Abdeckung 8 zwischen dem dort befindlichen, durch Messer 1 und Turboscheiben 12 bewegten Mähgut ständig eine zusätzlich wirkende Turbolenz erzeugt wird, die das geschnittene Mähgut immer wieder aufwirbelnd und wieder in den Wirkbereich der Messer und der Leitbleche herabdrückend, zu einer weiteren nahezu totalen Vermulchung des Mähgutes führt.

### Bezugszeichenliste

### "Mäh- und Mulchsystem für Rasenmäher"

- 1: Messer
- 2: Nabenteil
- 3: Messerflügel
- 4: Schneiden
- 5: Bogenförmige Schneidenabschnitte
- 6: Abweiselemente
- 7: Antriebswelle
- 8: Abdeckung
- 9: Rasenmähers
- 10: Aufnahmeteller
- 11: Leitbleche
- 12: Turboscheibe
- 13: Rotationsachse des Mäh- und Mulchwerkes
- 14: Rotationsebene

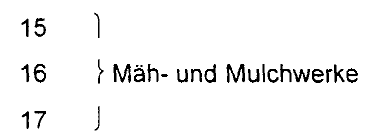

- 18: Turbine
- 19: wirkebene der Turbine
- 20: zentraler Antrieb
- 21: Leitbleche der Turbine 18

- V: Vortriebsrichtung des Rasenmähers

## Patentansprüche

1. Mäh- und Mulchsystem für Rasenmäher mit sichelartig arbeitenden mehrflügeligen Messern,
- bei denen sich die Messerflügel (3) seitlich von einem mit einer Antriebswelle (7) verbundenen Nabenteil (2) erstrecken und an ihren in Umlaufrichtung vorderen Längskanten mit Schneiden (4; 5) versehen sind, die sich, ausgehend von den Flügelenden bis zum Nabenteil (2) des Messers (1) erstrecken und in ihren in Umlaufrichtung vorderen Randbereichen jeweils unter Ausbildung eines äußeren Schneidenabschnitts (4) profiliert sind, an den sich ein über die Ebene des Nabenteils (2) hinaus ansteigender, mittlerer Schneidenabschnitt (5) anschließt, der in einen in die Ebene des Nabenteiles (2)
abfallenden, inneren Schneidenabschnitt übergeht, wobei die hinteren Längskanten der Messerflügel in oder oberhalb der Ebene des Nabenteiles (2) verlaufen und
- bei denen die Messerflügelenden als gegenüber der Umlaufebene des Messers schräggestellte Leitflächen ausgebildet sind, die ausgehend von den vorderen Längskanten der Messerflügel (3) zu den hinteren Längskanten hin einen ansteigenden Verlauf haben und dass der äußere Schneidenabschnitt (4) derart profiliert ist, dass dieser unterhalb der Ebene des Nabenteiles (2) liegt und
- bei dem im Bereich des Nabenteiles (2), oberhalb der Umlaufebene des Messers (1) eine aus Aufnahmeteller (10) und Leitblechen (11) gebildete, mit dem Messer auf der Antriebswelle (7) befestigte Turboscheibe (12) angeordnet ist, deren Größe derart bemessen ist, dass sie den Nabenteil (2) nach dem mittleren Schneidenabschnitt (5) hin übergreift und deren Leitbleche (11) nach oben hin in das Innere der Abdeckung (8) hineinragen, und bei dem
- mehrere aus Messern (1) und Turboscheiben (12) gebildete Mäh- und Mulchwerke (15; 16;17) in einem in Bezug auf die Schnittbreite und den Schnittvortrieb des Mäh- und Mulchwerkes gestaffelten System in Reihe nebeneinander angeordnet sind und seitlich der gestaffelten Mäh- u. Mulchwerke (15; 16; 17) eine nach Art eines Schaufelrades gestaltete, oberhalb der Arbeitsebene der Mäh- u. Mulchwerke wirkende Turbine (18) angeordnet ist deren Umlaufrichtung jener der Mäh- und Mulchwerke entspricht.

2. Mäh- und Mulchsystem für Rasenmäher nach Anspruch 1, **dadurch gekennzeichnet, daß** die Antriebsdrehzahlen der einzelnen Meser gleich oder unterschiedlich groß bemessen sind.

3. Mäh- und Mulchsystem für Rasenmäher nach Anspruch 1, **dadurch gekennzeichnet, daß** die Antriebsdrehzahl der Turbine (18) um bis zu 20% größer ist als jene der Messerantriebsdrehzahl.

4. Mäh- und Mulchsystem für Rasenmäher nach Anspruch 1, **dadurch gekennzeichnet, daß** das mittlere von drei Mäh- und Mulchwerken (15; 16; 17) in Vortriebsrichtung gesehen, etwa um den halben Messerdurchmesser nach vorne versetzt angeordnet ist.

5. Mäh- und Mulchsystem für Rasenmäher nach Anspruch 1, **dadurch gekennzeichnet, daß** das der Turbine (18) nächstgelegene Mäh- und Mulchwerk dreiflügelig ausgeführt ist.

6. Mäh- und Mulchsystem für Rasenmäher nach Anspruch 1, **dadurch gekennzeichnet, daß** die Turboscheiben (12) der einzelnen Messer einen unterschiedlich großen Durchmesser und / oder eine unterschiedlich bemessene Höhe aufweisen.

7. Mäh- und Mulchsystem für Rasenmäher nach Anspruch 1, **dadurch gekennzeichnet, daß** die Turboscheibe (12) mit ihren Leitblechen (11) etwa 1/3 bis 2/3 der Höhe der Abdeckung (8) einnimmt.

8. Turboscheibe für Mäh- und Mulchsystem für Rasenmäher nach Anspruch 1, **dadurch gekennzeichnet, daß** die Leitbleche (11) in Rotationsrichtung betrachtet zur Rotationsebene der Turboscheiben (12) nach vorwärts geneigt angeordnet sind.

9. Turboscheibe für Mäh- und Mulchsystem für Rasenmäher nach Anspruch 1, **dadurch gekennzeichnet, daß** die Leitbleche (11) in Rotationsreichtung betrachtet zur Rotationsebene der Turboscheiben (12) nach rückwärts geneigt sind.

10. Turboscheibe für Mäh- und Mulchsystem für Rasenmäher nach Anspruch 1, **dadurch gekennzeichnet, daß** die Leitbleche (11) auf dem Aufnahmeteller (10) in jeweils aufeinanderfolgenden ungleichen Winkelabständen angeordnet sind.

## Claims

1. Mowing and mulching system for lawnmowers with multi-vaned blades acting like sickles,
- in which the blade vanes (3) extend from a hub component (2) connected to a drive shaft (7), and which on their front longitudinal edge in the direction of rotation are equipped with cutters (4, 5), which extend from the vane ends to the hub component (2) of the blade (1), and which in their front edge area in the direction of rotation are profiled to form an outer cutting section (4), which is joined by an inclined central cutting section (5) extending above the level of the hub component (2), which leads into an inner cutting section sloping into the level of the hub component (2), and in which the rear longitudinal edges of the blade vanes continue in or above the level of the hub component (2), and
- in which the ends of the blade vanes are shaped as guiding surfaces inclined against the rotating level of the blade, and which, starting from the forward longitudinal edges of the blade vanes (3) toward the rear longitudinal edges have an inclining profile, and that outer cutting section (4) is profiled in such a way that it lies below the level of the hub component (2), and
- in which a turbo disc (12) is fitted in the area of the hub component (2), above the rotating level of the blade (1), consisting of a holder plate (10) and guide plates (11), and is attached to the blade on the drive shaft (7), whose size is such that it extends beyond the hub component (2) toward the central cutting section (5), and whose guide plates (11) project upward into the interior of the cover (8), and in which
- several mowing and mulching devices (15; 16; 17) consisting of blades (1) and turbo discs (12) are arranged next to each other in series in a staggered system with respect to the cutting width and cutting movement of the mowing and mulching device, and a turbine (18) is arranged to the side of the staggered mowing and mulching devices (15; 16; 17) designed in the form of a paddle wheel acting above the level of the mowing and mulching devices, its rotation direction corresponding to that of the mowing and mulching devices.

2. Mowing and mulching system for lawnmowers in accordance with Claim 1, **characterised by** the fact that the drive revolutions of the individual blades may be the same or different.

3. Mowing and mulching system for lawnmowers in accordance with Claim 1, **characterised by** the fact that the drive revolutions of the turbine (18) are up to 20% greater than those of the blade drive.

4. Mowing and mulching system for lawnmowers in accordance with Claim 1, **characterised by** the fact that the central of three mowing and mulching devices (15; 16; 17), viewed from the direction of movement is arranged offset toward the front by approximately half the blade diameter.

5. Mowing and mulching system for lawnmowers in accordance with Claim 1, **characterised by** the fact that the mowing and mulching device closest to the turbine (18) is designed with three vanes.

6. Mowing and mulching system for lawnmowers in accordance with Claim 1, **characterised by** the fact that the turbo discs (12) of the individual blades are of a different diameter and/or a different height.

7. Mowing and mulching system for lawnmowers in accordance with Claim 1, **characterised by** the fact that the turbo disc (12) with its guide plates (11) takes up about 1/3 to 2/3 of the height of the cover (8).

8. Turbo disc for mowing and mulching system for lawnmowers in accordance with Claim 1, **characterised by** the fact that the guide plates (11), viewed from the rotation direction, are arranged inclined forwards toward the rotation level of the turbo discs (12).

9. Turbo disc for mowing and mulching system for lawnmowers in accordance with Claim 1, **characterised by** the fact that the guide plates (11), viewed from the rotation direction, are arranged inclined rearwards toward the rotation level of the turbo discs (12).

10. Turbo disc for mowing and mulching system for lawnmowers in accordance with Claim 1, **characterised by** the fact that the guide plate (11) on the holder plate (10) are arranged at consecutively unequal angular separating distances.

## Revendications

1. Système de coupe et de déchiquetage pour tondeuse à gazon fonctionnant avec des lames à pales multiples en forme de faucille,
- pour lesquelles les pales de lame (3) s'étendent latéralement par rapport à un élément de moyeu (2) relié à un arbre d'entraînement (7) et sont équipées de tranchants (4,5) dans le sens de rotation sur leurs bords longitudinaux avants, ces tranchants s'étendant des extrémités des pales jusqu'à l'élément de moyeu (2) de la lame (1) et étant profilés au niveau des zones de rebord avants dans le sens de rotation par l'entremise d'une section de tranchant extérieure (4) sur laquelle se raccorde une section de tranchant intermédiaire (5), s'élevant au dessus du plan de l'élément de moyeu (2). Cette section de tranchant intermédiaire passe à une section de tranchant intérieure descendant dans le plan de l'élément de moyeu (2), les bords longitudinaux arrières des pales de lames passant dans et au dessus du plan de l'élément de moyeu (2) et
- pour lesquelles les extrémités des pales de lame sont conçues comme surfaces de guidage placées en biais vis-à-vis du plan de circulation de la lame, celles-ci possédant un tracé montant en partant des bords longitudinaux avants des pales de lame (3) jusqu'aux bords longitudinaux arrières. La section de tranchant extérieure (4) est profilée de telle manière qu'elle se trouve en dessous du plan de l'élément de moyeu (2) et
- pour laquelle est installé au dessus du plan de circulation de la lame (1) un disque turbo (12) composé d'un plateau de réception (10) et de plaques de guidage (11) et fixé avec la lame sur l'arbre d'entraînement (7), et dont la taille est mesurée de telle façon qu'elle saisisse l'élément de moyeu (2) après la section de tranchant intermédiaire (5) et dont ses plaques de guidage (11) dépassent vers le haut à l'intérieur du recouvrement (8) et
- pour laquelle plusieurs mécanismes de coupe et de déchiquetage (15; 16; 17) formés de lames (1) et de disques turbo (12) sont disposés en rang l'un à côté de l'autre dans un système échelonné par rapport à la largeur de coupe et à l'avance de coupe et pour laquelle une turbine (18) fonctionnant au dessus de plan de travail des mécanismes de coupe et de déchiquetage échelonnés est placée à côté des mécanismes de coupe et de déchiquetage échelonnés (15; 16; 17), cette turbine étant réalisée à la manière d'une roue pelleteuse. Le sens de rotation de la turbine correspond à celui des mécanismes de coupe et de déchiquetage.

2. Un système de coupe et de déchiquetage pour tondeuse à gazon selon l'exigence 1 est **caractérisé par le fait que** les vitesses d'entraînement des différentes lames sont mesurées avec la même valeur ou avec des valeurs différentes.

3. Un système de coupe et de déchiquetage pour tondeuse à gazon selon l'exigence 1 est **caractérisé par le fait que** la vitesse d'entraînement de la turbine (18) est jusqu'à 20% plus élevée que chaque vitesse d'entraînement de lame.

4. Un système de coupe et de déchiquetage pour tondeuse à gazon selon l'exigence 1 est **caractérisé par le fait que** le mécanisme intermédiaire des trois mécanismes de coupe et de déchiquetage (15 ; 16 ; 17), observé dans le sens de l'avance, est disposé vers l'avant d'environ la moitié du diamètre de lame.

5. Un système de coupe et de déchiquetage pour tondeuse à gazon selon l'exigence 1 est **caractérisé par le fait que** le mécanisme de coupe et de déchiquetage le plus proche de la turbine (18) est conçu à trois pales.

6. Un système de coupe et de déchiquetage pour tondeuse à gazon selon l'exigence 1 est **caractérisé par le fait que** les disques turbo (12) des différentes lames possèdent un diamètre de taille différente et/ou présentent une hauteur mesurée différemment.

7. Un système de coupe et de déchiquetage pour tondeuse à gazon selon l'exigence 1 est **caractérisé par le fait que** le disque turbo (12) ainsi que ses plaques de guidage (11) occupent environ 1/3 à 2/3 de la hauteur du recouvrement (8).

8. Un disque turbo d'un système de coupe et de déchiquetage pour tondeuse à gazon selon l'exigence 1 est **caractérisé par le fait que** les plaques de guidage (11), observées dans le sens de rotation, sont disposées en étant inclinées vers l'avant par rapport au plan de rotation des disques turbo (12).

9. Un disque turbo d'un système de coupe et de déchiquetage pour tondeuse à gazon selon l'exigence 1 est **caractérisé par le fait que** les plaques de guidage (11), observées dans le sens de rotation, sont inclinées vers l'arrière par rapport au plan de rotation des disques turbo (12).

10. Un disque turbo d'un système de coupe et de déchiquetage pour tondeuse à gazon selon l'exigence 1 est **caractérisé par le fait que** les plaques de guidage (11) sur le plateau de réception (10) sont disposées à des distances angulaires successives inégales.
